# EUROPÄISCHE PATENTANMELDUNG

(11) **EP 2 299 294 A1**
(43) Veröffentlichungstag der Anmeldung: **23.03.2011**
(21) Anmeldenummer: 10169762.1
(22) Anmeldetag: 16.07.2010
(51) Int. Cl.: G01S 19/42

(54) **Zeitversetzte Positionsbestimmung**

(30) Priorität: 29.07.2009 DE 102009028073
(71) Anmelder: Robert Bosch GmbH, 70442 Stuttgart (DE)
(72) Erfinder: May, Thomas, 38302 Wolfenbuettel (DE); Walossek, Erik, 30655 Hannover (DE); Jakoblew, Sascha, 31141 Hildesheim (DE)

(57) **Zusammenfassung**

Ein Verfahren zum Bestimmen einer Position eines Empfängers für von Satelliten ausgesandte Satellitensignale auf der Basis von Satellitenpositionen und Abständen des Empfängers zu den Satelliten umfasst Schritte des Empfangens eines von einem Satelliten ausgesandten Satellitensignals, des Bestimmens eines Pseudoabstands zu dem Satelliten, des Speicherns des Pseudoabstands, falls zum Empfangszeitpunkt des Satellitensignals die Satellitenposition unbekannt ist, und des Bestimmens der Empfängerposition für den Empfangszeitpunkt auf der Basis des gespeicherten Pseudoabstands und der Satellitenposition, nachdem die Satellitenposition bekannt geworden ist.

## Beschreibung

### Beschreibung

Die Erfindung betrifft ein Verfahren zur Positionsbestimmung. Insbesondere betrifft die Erfindung ein Verfahren und eine Vorrichtung zum Bestimmen einer Position eines Satellitensignal-Empfängers für zurückliegend empfangene Signale.

### Stand der Technik

Zur radiobasierten Positionsbestimmung eines Empfängers werden von diesem üblicherweise von mehreren, räumlich verteilten Sendern Radiosignale empfangen und aus den empfangenen Signalen auf Entfernungen des Empfängers zu den einzelnen Sendern zurückgeschlossen. Mittels mathematischer Verfahren wie beispielsweise einer Triangulierung kann anschließend eine Empfängerposition auf der Basis der empfangenen Signale bestimmt werden, falls die Positionen der Sender bekannt sind. Für die Angabe von Positionen sowohl des Empfängers als auch der Sender wird üblicherweise ein übergreifendes Koordinatensystem verwendet.

Bei Satellitennavigationssystemen, wie beispielsweise GPS, GALILEO, GLONASS oder COMPASS befinden sich die Sender auf Satelliten, die sich bezüglich eines erdfesten Koordinatensystems bewegen. Positionen der Satelliten müssen auf der Basis einer zumindest partiellen Bahnbeschreibung des Satelliten, den sogenannten Ephemeriden, bezüglich eines Aussendezeitpunkts des Satellitensignals bestimmt werden. Ephemeriden können beispielsweise eine partielle Bahnbeschreibung des Satelliten als Parameter einer Keppler'schen Umlaufbahn, eines Polynoms oder eines Ortes und dessen zeitlicher Ableitungen umfassen. Liegen die Ephemeriden nicht vor, so kann eine Positionsbestimmung des Empfängers konventionell nicht durchgeführt werden.

In der US 2006/0055598 A1 wird vorgeschlagen, Ephemeriden empfangener Satelliten auf einer zusätzlichen Datenverbindung zu empfangen. Hierfür wird beispielsweise eine GSM- oder UMTS-Verbindung zu einem Bereitsteller von E-phemeridendaten vorgeschlagen. Allerdings ist eine solche Verbindung in der Regel kostenpflichtig und auch verlangt der Bereitsteller üblicherweise eine Dienstgebühr. Zusätzlich erfordern auch das Aufbauen einer solchen Verbindung und das Abrufen der verlangten Informationen eine gewisse Zeit, die unter Umständen mit der Wartezeit auf die kostenlos vom Satelliten ausgesandten Ephemeriden vergleichbar ist.

Eine andere Herangehensweise besteht darin, Ephemeriden zu schätzen, beispielsweise auf der Basis von wesentlich ungenaueren Almanach-Daten, die meistens bereits vorliegen, bevor ein Satellitensignal empfangen wird. Eine solche Lösung resultiert jedoch in entsprechend ungenauen Positionsbestimmungen.

### Offenbarung der Erfindung

Der Erfindung liegt die Aufgabe zugrunde, eine Technik bereitzustellen, mittels derer eine Bestimmung einer Empfängerposition bezüglich Satellitensignalen möglich ist, zu deren Empfangszeitpunkt die Position des aussendenden Satelliten unbekannt ist. Die Aufgabe wird gelöst durch ein Verfahren nach Anspruch 1 und eine Vorrichtung nach Anspruch 9. Unteransprüche geben vorteilhafte bzw. bevorzugte Ausführungsformen an.

Nach einem ersten Aspekt umfasst ein Verfahren zum Bestimmen einer Position eines Empfängers für von Satelliten ausgesandte Satellitensignale auf der Basis von Satellitenpositionen und Abständen des Empfängers zu den Satelliten die Schritte des Empfangens eines von einem Satelliten ausgesandten Satellitensignals, des Bestimmens eines Pseudoabstands zu diesem Satelliten, des Speicherns des Pseudoabstands, falls die Satellitenposition für den Aussendezeitpunkt des Satellitensignals unbekannt ist, und des Bestimmens der Empfängerposition für den Empfangszeitpunkt des Satellitensignals auf der Basis des gespeicherten Pseudoabstands und der Satellitenposition, nachdem die Satellitenposition bekannt geworden ist.

Da ein Bestimmen der Empfängerposition zum Empfangszeitpunkt ohne Kenntnis der Satellitenposition zunächst nicht möglich ist und ein Abspeichern unverarbeiteter Satellitensignale einen hohen Speicheraufwand und gegebenenfalls auch eine hohe Speicherbandbreite erfordern, werden durch Speicherung teilverarbeiteter Signale in Form von Pseudoabständen die Anforderungen an eine Speicherung drastisch gesenkt. Darüber hinaus kann eine Positionsbestimmung, nachdem die Satellitenposition bekannt geworden ist, mit vermindertem Aufwand durchgeführt werden, da der Schritt des Bestimmens von Pseudoabständen aus den Satellitensignalen ja bereits durchgeführt ist. Gegenüber bekannten Verfahren, die Ephemeriden schätzen oder aus anderen Quellen als dem Satellitensignal beziehen, kann mittels des angegebenen Verfahrens eine hohe Positionierungsgenauigkeit ohne zusätzlichen Aufwand für Datenakquise realisiert werden.

Das Bestimmen des Pseudoabstands (auch: Pseudostrecke oder pseudorange) kann auf Basis der Satellitenzeit zum Sendezeitpunkt erfolgen. Ein Pseudoabstand unterscheidet sich von einem geometrischen Abstand dadurch, dass er einen Anteil für einen Zeitversatz zwischen Satelliten- und Empfängerzeit umfasst. Dieser Anteil ist dadurch bedingt, dass übliche Empfängeruhren (z. B. Quarzuhren) keine ausreichende Langzeitstabilität aufweisen, um als synchron mit den sehr genauen und untereinander synchronisierten Satellitenuhren (z.B. Cäsium-oder Rubidium-Uhren) laufend angesehen zu werden. Im Rahmen einer Positionsbestimmung wird dieser Zeitversatz zusammen mit den drei räumlichen Freiheitsgraden (x, y, z) des Empfängers als zusätzlicher zeitlicher Freiheitsgrad (t) bestimmt. Um die vier Freiheitsgrade (x, y, z, t) zu bestimmen, sind Pseudoabstände und damit Signale von wenigstens vier Satelliten erforderlich. Werden Signale von weiteren Satelliten empfangen, liegt eine Überbestimmung vor, die zur Genauigkeitsverbesserung der bestimmten Position ausgenützt werden kann.

Das Satellitensignal kann die Satellitenzeit des sendenden Satelliten zum Sendezeitpunkt übermitteln und die Satellitenzeit des Satelliten zum Sendezeitpunkt kann aus dem empfangenen Satellitensignal bestimmt werden. Die Satellitenzeit wird üblicherweise häufiger als die Ephemeriden mittels des Satellitensignals übermittelt, so dass eine Bestimmung des Sendezeitpunkts relativ schnell nach einem ersten Empfangen eines Satellitensignals möglich ist.

Der Pseudoabstand kann auf der Basis einer so genannten Code-Phase oder einer so genannten Trägerphase bestimmt werden. Für eine Bestimmung auf der Basis der Code-Phase kann eine Differenz aus der Empfängerzeit zum Empfangszeitpunkt und der Satellitenzeit zum Sendezeitpunkt gebildet und mit der Ausbreitungsgeschwindigkeit des Signals multipliziert werden. Im Fall des Bestimmens des Pseudoabstands auf der Basis einer Trägerphase wird im Empfänger das Trägersignal des Satelliten reproduziert und ein Phasenwinkel zwischen dem reproduzierten und dem einfallenden Trägersignal ausgewertet. Der Phasenwinkel gibt einen Bruchteil der Wellenlänge der Trägerphase an, die Bestandteil des Abstandes zwischen dem Empfänger und dem Satelliten ist. Die für eine Bestimmung des Abstandes zusätzlich erforderliche Anzahl vollständiger Wellenzyklen (die so genannte Mehrdeutigkeit) kann mittels mathematischer Verfahren aus einer Vielzahl empfangener Satellitensignale bestimmt werden.

Das Verfahren kann ferner den Schritt des Löschens von abgespeicherten Pseudoabständen umfassen, deren Alter einen vorbestimmten Schwellenwert übersteigen. Vom Satelliten übermittelte Ephemeriden haben nur eine begrenzte Gültigkeit, jenseits derer die tatsächliche Position des Satelliten nicht mehr genau genug aus den Ephemeriden ableitbar ist. Daher können beispielsweise Pseudoranges, die älter als die maximale Gültigkeitsdauer der Ephemeriden sind, daher gelöscht werden.

Nach einem zweiten Aspekt umfasst eine Vorrichtung zur Bestimmung einer Position eines Empfängers für von Satelliten ausgesandte Satellitensignale auf der Basis von Satellitenpositionen und Abständen des Empfängers zu den Satelliten eine Empfangseinrichtung zum Empfangen eines von einem Satelliten ausgesandten Satellitensignals, eine Verarbeitungseinrichtung zur Bestimmung eines Pseudoabstandes zu dem Satelliten, einen Speicher zur Aufnahme des Pseudoabstandes, falls die Satellitenposition für den Aussendezeitpunkt des Satellitensignals unbekannt ist, und eine Positioniereinrichtung zur Bestimmung der Empfängerposition für den Empfangszeitpunkt des Satellitensignals auf der Basis des gespeicherten Pseudoabstands und der Satellitenposition, nachdem die Satellitenposition bekannt geworden ist. Um mit einer solchen Vorrichtung Empfängerpositionen für zurückliegende Empfangszeitpunkte bestimmen zu können, ist im Vergleich zu handelsüblichen Satellitennavigationsempfängern lediglich ein relativ bescheidener zusätzlicher Speicher zur Aufnahme der Pseudoentfernungen erforderlich.

Die Vorrichtung kann eine Decodiereinrichtung zur Decodierung einer im Satellitensignal des sendenden Satelliten übermittelten Satellitenzeit umfassen. Auf die gleiche Weise wie die Satellitenzeit können auch Ephemeriden des Satelliten mittels des Satellitensignals übermittelt werden. Die Decodiereinrichtung kann daher zur Decodierung beider Informationen aus dem Satellitensignal ausgebildet sein. Dadurch sind keine weiteren Informationsquellen erforderlich, um die beschriebene Positionsbestimmung durchzuführen.

Im Folgenden wird die Erfindung anhand der beigefügten Figuren genauer beschrieben, in denen:
- Figur 1 eine schematische Darstellung eines Satellitennavigationssystems;
- Figur 2 einen zeitlichen Ablauf beim Empfang von Signalen gemäß Figur 1;
- Figur 3 einen Überblick einer beispielhaften Navigationsnachricht eines Satelliten aus Figur 1;
- Figur 4 eine schematische Darstellung einer Vorrichtung zum Einsatz in einem Satellitennavigationssystem nach Figur 1, und
- Figur 5 ein Ablaufdiagramm eines Verfahrens zum Einsatz in der Vorrichtung aus Figur 4 darstellen.

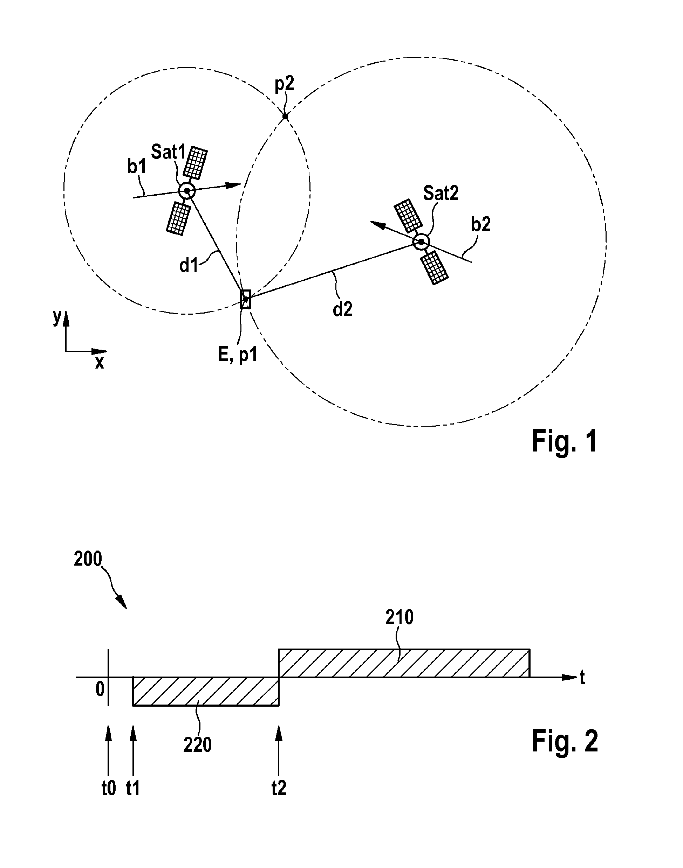

Figur 1 zeigt eine vereinfachte schematische Darstellung eines Satellitennavigationssytems 100. Das Satellitennavigationssystem 100 umfasst Satelliten Sat1 und Sat2 mit angedeuteten Satellitenbahnen b1 und b2 und einen Empfänger E. Das angedeutete x-y-Koordinatensystem gilt für beide Satelliten Sat1 und Sat2 und den Empfänger E. Aus Gründen der Übersichtlichkeit sind nur zwei Satelliten Sat1, Sat2 für eine Bestimmung einer Empfängerposition in einer Ebene (der Darstellungsebene) dargestellt.

Die Position p1 des Empfängers E wird bestimmt, indem zunächst ein erster geometrischer Abstand d1 vom Empfänger E zum Satelliten Sat1 und ein zweiter geometrischer Abstand d2 vom Empfänger E zum Satelliten Sat2 bestimmt werden. In Kenntnis von Positionen der Satelliten Sat1 und Sat2 werden anschlieβend diejenigen Punkte p1 und p2 bestimmt, welche die bestimmten Abstände d1 und d2 zu den Satelliten Sat1 bzw. Sat2 aufweisen. Graphisch ist dies durch Bestimmen der Schnittpunkte p1, p2 eines Kreises mit dem Radius d1 um Sat1 mit einem Kreis mit dem Radius d2 um Sat2 dargestellt. P2 liegt außerhalb der Satellitenbahnen und kann aus Mangel an Plausibilität als Position des Empfängers E verworfen werden, so dass p1 als die gesuchte Position des Empfängers E bestimmt wird. Es wird deutlich, dass eine Position des Empfängers E auch bei Kenntnis der Abstände d1 und 2 zu den Satelliten Sat1 und Sat2 nicht bestimmt werden kann, wenn die Positionen der Satelliten Sat1, Sat2 nicht bekannt sind. Die Positionen werden aufgrund der hohen Bewegungsgeschwindigkeiten der Satelliten Sat1, Sat2 als Ephemeriden übermittelt, aus denen die Satellitenbahnen b1, b2 ableitbar sind, so dass von einem Sendezeitpunkt eines Satellitensignals auf eine Satellitenposition geschlossen werden kann.

Allerdings können auch ohne Kenntnis der Ephemeriden Pseudoentfernungen bestimmt werden, beispielsweise auf der Basis einer Code-Phase, indem die Entfernung auf der Basis einer Ausbreitungsgeschwindigkeit des Satellitensignals und einer Reisedauer des Satellitensignals bestimmt wird, wobei eine inkorrekte Reisedauer aufgrund eines Unterschieds zwischen Satelliten- und Empfängerzeit ignoriert wird. Eine entsprechende Bestimmung von Pseudoabständen kann auf der Basis von Phasenwinkeln von Trägerphasen, die die Satelliten Sat1, Sat2 aussenden, bestimmt werden, wobei entsprechend ein Phasenversatz zwischen den Trägerphasen der Satelliten Sat1, Sat2 und des Empfängers ignoriert wird.

Figur 2 zeigt einen zeitlichen Ablauf 200 beim Empfang von Signalen durch den Empfänger E in Figur 1. In einer horizontalen Richtung ist eine Zeit t angetragen. Bezüglich dieser Zeit sind Zeitpunkte t0, t1 und t2 sowie ein auf den Zeitpunkt t2 folgender Zeitbereich 210 und ein zwischen den Zeitpunkten t1 und t2 liegender Zeitbereich 220 angegeben.

Zum Zeitpunkt t0 wird mit einem Empfangsversuch eines Satelliten begonnen. Kurz darauf, zum Zeitpunkt t1, wird ein Empfang von Satellitensignalen hergestellt und Informationen des Satelliten werden empfangen. Diese Informationen umfassen die Satellitenzeit und eine Bahnbeschreibung (Ephemeriden) des Satelliten, wobei die Satellitenzeit wesentlich häufiger als die Ephemeriden übermittelt wird. Ab dem Zeitpunkt t1 kann aus dem empfangenen Satellitensignal die Satellitenzeit abgeleitet werden; Ephemeriden des Satelliten sind jedoch noch nicht übertragen und daher kann eine Position des Empfängers E auf der Basis der empfangenen Signale zunächst nicht durchgeführt werden. Allerdings können Pseudoentfernungen bestimmt und eine spätere Verwendung abgespeichert werden. Zum Zeitpunkt t2 sind die Ephemeriden des Satelliten vollständig übermittelt, so dass im Bereich 210 nach dem Zeitpunkt t2 Positionen des Empfängers E bezüglich des dann empfangenen Satellitensignals bestimmt werden können. Darüber hinaus können ab dem Zeitpunkt t2 dieselben Ephemeriden dazu verwendet werden, Positionen des Satelliten im Bereich 220 zu bestimmen, so dass Positionen des Empfängers E für den Bereich 220 auf der Basis der gespeicherten Pseudoentfernungen bestimmt werden können. Ab dem Zeitpunkt t2 kann somit eine Position des Empfängers E bezüglich eines beliebigen Zeitpunkts nach t1 lückenlos bestimmt werden.

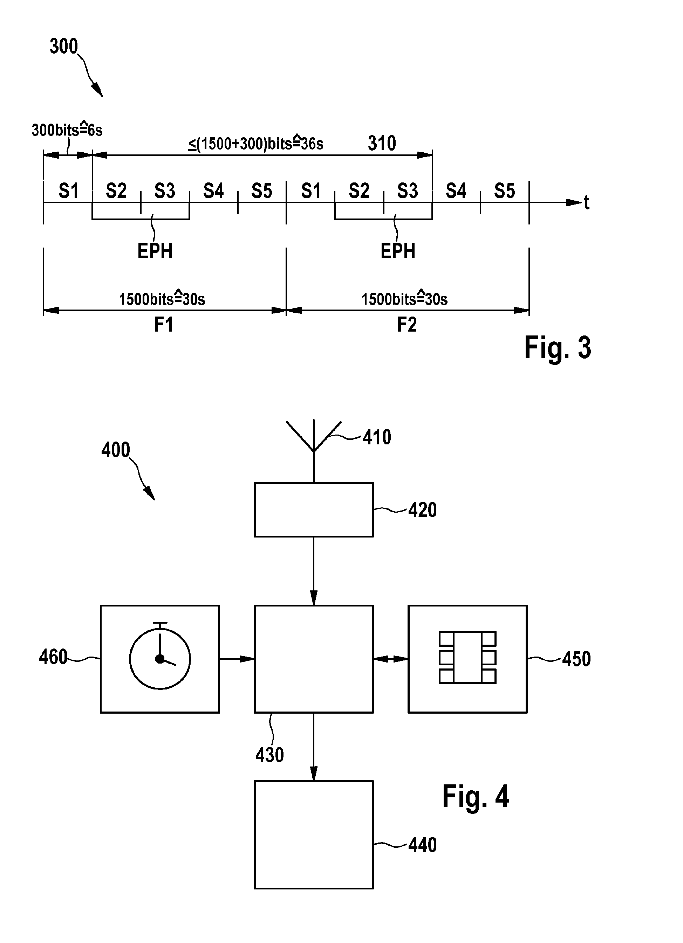

Figur 3 zeigt einen Überblick einer beispielhaften Navigationsnachricht 300 eines Satelliten Sat1, Sat2 aus Figur 1 am Beispiel eines NAVSTAR-Satelliten im Satellitennavigationssystem GPS. In horizontaler Richtung ist eine Zeit angetragen. Der Satellit übermittelt eine Navigationsnachricht 300 (den sogenannten Code) mit vorbestimmten Feldern in einer festen zeitlichen Abfolge. Die Übertragungsgeschwindigkeit beträgt 50 Bits pro Sekunde. Dargestellt sind ein erster zeitlicher Rahmen F1 und ein zweiter zeitlicher Rahmen F2, die jeweils in Unter-Rahmen S1 bis S5 unterteilt sind. Jeder Unter-Rahmen S1 bis S5 umfasst 300 Bits, deren Übermittlung 6 Sekunden erfordert, so dass jeder Rahmen F1, F2 1500 Bits umfasst, die innerhalb von 30 Sekunden übermittelt werden. Die Ephemeriden-Informationen befinden jeweils sich in den Unter-Rahmen S2 und S3; eine vollständige Übermittlung dieser beiden Unter-Rahmen erfordert 12 Sekunden.

Im ungünstigsten Fall wird die Navigationsnachricht 300 erst ab einem Zeitpunkt empfangen, der unmittelbar nach Beginn des Unter-Rahmens S1 des Rahmens F1 liegt. Die im Folgenden empfangenen Ephemeriden des Rahmens F1 sind nicht brauchbar, da sie nicht vollständig empfangen werden. Bis zum nächsten Beginn einer Übermittlung von Ephemeriden in den Unter-Rahmen S2 und S3 des Rahmens F2 vergeht daher eine Zeitspanne, die maximal so lang wie einer der Rahmen F1, F2 ist, also 30 Sekunden. Anschließend vergehen noch einmal 12 Sekunden, während derer die Ephemeriden in den Unter-Rahmen S2 und S3 des Rahmens F2 übermittelt werden. Die maximale Wartezeit 310 zwischen dem ersten Empfangen des Satellitensignals und dem Vorliegen der vollständigen Ephemeriden-Informationen beträgt somit 36 Sekunden. Während dieser Wartezeit 310 können jedoch schon Pseudoabstände bestimmt werden, da die Satellitenzeit zu Beginn jedes der Unter-Rahmen S1 bis S5 in Form eines sogenannten Handover-Word (HOW) übermittelt wird. Das HOW beginnt mit 17 Bits der Satellitenzeit, so dass die Wartezeit, bis eine Pseudoentfernung bestimmt werden kann, maximal 6,34 Sekunden, entsprechend 317 Bits, nach einem ersten Empfangen des Satellitensignals beträgt, falls die Pseudoentfernung auf der Basis des Code bzw. der Code-Phase bestimmt werden soll.

Figur 4 zeigt eine schematische Darstellung einer Vorrichtung 400 zum Einsatz als Empfänger E im Satellitennavigationssystem 100 aus Figur 1. Die Vorrichtung 400 umfasst eine mit einer Antenne 410 verbundene Empfangseinrichtung 420, die ihrerseits mit einer Verarbeitungseinrichtung 430 verbunden ist. Die Verarbeitungseinrichtung 430 ist ferner mit einer Ausgabeeinrichtung 440, einem Speicher 450 sowie einer Uhr 460 verbunden.

Die mittels der Antenne 410 empfangenen Signale werden von der Empfangseinrichtung 420 ausgewertet und der Verarbeitungseinrichtung 430 bereitgestellt. Die Verarbeitungseinrichtung 430 führt unterschiedliche Bestimmungen an dem bereitgestellten Signal durch. Dazu gehört das Decodieren der Navigationsnachricht 300, das Bestimmen einzelner Felder sowie das Auswerten des Inhalts dieser Felder. Außerdem kann die Empfangseinrichtung 420 der Verarbeitungseinrichtung 430 Informationen über einen Phasenwinkel einer einfallenden Trägerphase, auf die die Navigationsnachricht 300 aufmoduliert ist, bereitstellen. Die Verarbeitungseinrichtung 430 bestimmt einen Pseudoabstand zu einem Satelliten, dessen Satellitensignal empfangen wurde, entweder auf der Basis einer mit Hilfe der Uhr 460 durchgeführten Zeitmessung, wie lange eine Ausbreitung des Satellitensignals vom Satelliten zur Vorrichtung 400 gedauert hat, oder auf der Basis der Phasenwinkel-Information an der Empfangseinrichtung 420.

Solange eine Position des Satelliten zum Sendezeitpunkt nicht bekannt ist, d. h. solange die Ephemeriden des Satelliten nicht vollständig empfangen wurden, bestimmt die Verarbeitungseinrichtung 430 Pseudoabstände und speichert diese im Speicher 450 ab. Sobald die Ephemeriden empfangen wurden und Positionen des Satelliten für die Sendezeitpunkte bestimmbar sind, bestimmt die Verarbeitungseinrichtung 430 Positionen bezüglich der im Speicher 450 abgelegten Pseudoentfernungen im Nachhinein und gibt die Positionen mittels der Ausgabeeinrichtung 440 aus. Zusätzlich kann die Verarbeitungseinrichtung 430 Positionen bezüglich aktuell empfangener Satellitensignale bestimmen und gegebenenfalls mittels der Ausgabeeinrichtung 440 ausgeben.

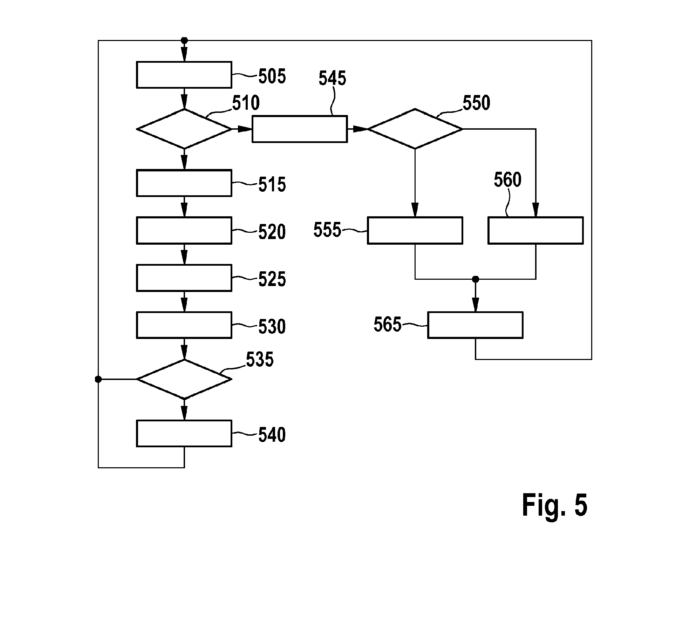

Figur 5 zeigt ein Ablaufdiagramm eines Verfahrens 500 zum Einsatz in der Vorrichtung 400 aus Figur 4. Das Verfahren beginnt in einem Schritt 505, in dem ein von einem Satelliten ausgesandtes Satellitensignal empfangen wird. Danach wird in einem Schritt 510 geprüft, ob eine Position des aussendenden Satelliten bestimmbar ist. Ist dies nicht der Fall, so wird in einem Schritt 515 auf der Basis des Satellitensignals eine Satellitenzeit bestimmt. Sodann wird in einem Schritt 520 auf der Basis lokaler Uhreninformationen eine Zeitdifferenz zwischen dem Sendezeitpunkt bezüglich der Satellitenzeit und dem Empfangszeitpunkt bezüglich der Uhreninformationen bestimmt, bevor in einem Schritt 525 auf der Basis dieser Differenz ein Pseudoabstand zum Satelliten bestimmt wird. Der bestimmte Pseudoabstand wird dann in einem Schritt 530 abgespeichert. In einem folgenden Schritt 535 wird geprüft, ob veraltete Pseudoabstände abgespeichert sind, und falls dies der Fall ist, werden diese in einem Schritt 540 gelöscht, bevor das Verfahren zum Schritt 505 zurückkehrt und erneut durchläuft.

Ist die Satellitenposition im Schritt 510 allerdings bestimmbar, so sie in einem Schritt 545 aus dem empfangenen Satellitensignal bestimmt und es wird in einem folgenden Schritt 550 überprüft, ob abgespeicherte Pseudoabstände vorhanden sind. Ist dies der Fall, so werden in einem Schritt 555 auf der Basis der Satellitenposition und der gespeicherten Pseudoabstände Positionen für die zurückliegenden Empfangszeitpunkte der Satellitensignale bestimmt, aus denen die Pseudoabstände bestimmt wurden. Liegen in Schritt 550 keine gespeicherten Pseudoabstände vor, so wird in einem Schritt 560 eine Position bezüglich des aktuell empfangenen Satellitensignals bestimmt. In einem der Schritte 555 oder 560 bestimmte Positionen werden in einem Schritt 565 ausgegeben, bevor das Verfahren zum Schritt 505 zurückkehrt und erneut durchläuft.

## Patentansprüche

1. Verfahren (500) zum Bestimmen einer Position eines Empfängers (E) für von Satelliten (Sat1, Sat2) ausgesandte Satellitensignale auf der Basis von Satellitenpositionen und Abständen des Empfängers (E) zu den Satelliten (Sat1, Sat2), mit folgenden Schritten:
- Empfangen (505) eines von einem Satelliten (Sat1, Sat2) ausgesandten Satellitensignals;
- Bestimmen (525) eines Pseudoabstands zu diesem Satelliten (Sat1, Sat2);
- Speichern (530) des Pseudoabstands, falls die Satellitenposition für den Aussendezeitpunkt des Satellitensignals unbekannt ist; und
- Bestimmen (550) der Empfängerposition für den Empfangszeitpunkt des Satellitensignals auf der Basis des gespeicherten Pseudoabstands und der Satellitenposition, nachdem die Satellitenposition bekannt geworden ist.

2. Verfahren (500) nach Anspruch 1, wobei das Bestimmen (525) des Pseudoabstands auf der Basis der Satellitenzeit zum Sendezeitpunkt erfolgt.

3. Verfahren (500) nach Anspruch 2, wobei das Satellitensignal die Satellitenzeit des sendenden Satelliten (Sat1, Sat2) zum Sendezeitpunkt übermittelt, ferner umfassend den Schritt des Bestimmens (515) der Satellitenzeit des Satelliten zum Sendezeitpunkt aus dem empfangenen Satellitensignal.

4. Verfahren (500) nach Anspruch 3, wobei das Bestimmen (525) des Pseudoabstandes auf der Basis einer Differenz aus der Empfängerzeit zum Empfangszeitpunkt und der Satellitenzeit zum Sendezeitpunkt erfolgt.

5. Verfahren (500) nach Anspruch 4, wobei die Empfängerzeit einen unbekannten Zeitversatz zur Satellitenzeit aufweist.

6. Verfahren (500) nach Anspruch 3, wobei das Satellitensignal mit einer Trägerfrequenz ausgesendet wird und das Bestimmen eines Pseudoabstandes (525) auf der Basis der Phasenlage der Trägerfrequenz am Empfänger zum Empfangszeitpunkt erfolgt.

7. Verfahren (500) nach einem der Ansprüche 1 bis 6, wobei das Satellitensignal eine Beschreibung der Satellitenposition des Satelliten für einen bestimmten Zeitraum übermittelt, ferner umfassend den Schritt des Bestimmens (545) der Satellitenposition zum Sendezeitpunkt auf der Basis der Beschreibung.

8. Verfahren (500) nach einem der Ansprüche 1 bis 7, wobei das Löschen (540) von abgespeicherten Pseudoabständen, deren Alter einen vorbestimmten Schwellenwert übersteigen, durchgeführt wird.

9. Vorrichtung (400) zur Bestimmung einer Position eines Empfängers (E) für von Satelliten (Sat1, Sat2) ausgesandte Satellitensignale auf der Basis von Satellitenpositionen und Abständen des Empfängers (E) zu den Satelliten, umfassend:
- eine Empfangseinrichtung (420) zum Empfangen eines von einem Satelliten ausgesandten Satellitensignals;
- eine Verarbeitungseinrichtung (430) zur Bestimmung eines Pseudoabstandes zu dem Satelliten;
- einen Speicher (450) zur Aufnahme des Pseudoabstandes, falls die Satellitenposition für den Aussendezeitpunkt des Satellitensignals unbekannt ist; und
- eine Positioniereinrichtung (430) zur Bestimmung der Empfängerposition für den Empfangszeitpunkt des Satellitensignals auf der Basis des gespeicherten Pseudoabstands und der Satellitenposition, nachdem die Satellitenposition bekannt geworden ist.

10. Vorrichtung nach Anspruch 9, wobei eine Decodiereinrichtung (430) zur Decodierung einer im Satellitensignal des sendenden Satelliten übermittelten Satellitenzeit vorgesehen ist.
